# EUROPÄISCHE PATENTSCHRIFT

(11) **EP 4 252 505 B1**
(45) Veröffentlichungstag und Bekanntmachung des Hinweises auf die Patenterteilung: **12.08.2026**
(21) Anmeldenummer: 23153487.6
(22) Anmeldetag: 26.01.2023
(51) Int. Cl.: A01B 63/111, A01B 69/00

(54) **VERFAHREN ZUR OPTIMIERUNG VON BETRIEBSPARAMETERN EINES LANDWIRTSCHAFTLICHEN GESPANNS**
METHOD FOR OPTIMIZING OPERATING PARAMETERS OF AN AGRICULTURAL VEHICLE
PROCÉDÉ D'OPTIMISATION DE PARAMÈTRES DE FONCTIONNEMENT D'UN ATTELAGE AGRICOLE

(30) Priorität: 30.03.2022 DE 102022107610
(43) Veröffentlichungstag der Anmeldung: 04.10.2023
(73) Patentinhaber: CLAAS Tractor S.A.S., 78141 Vélizy-Villacoublay Cedex (FR)
(72) Erfinder: Birkmann, Christian, 33775 Versmold (DE); Autermann, Ludger, 48317 Drensteinfurt (DE)
(74) Vertreter: CLAAS Gruppe

(56) Entgegenhaltungen:
- EP-A1- 3 289 847
- EP-A1- 3 626 038
- DE-A1- 102018 128 096
- DE-A1- 102019 210 325
- JP-A- 2021 040 588
- US-A1- 2019 059 200
- MARTIN VON HOYNINGEN-HUENE ET AL: "Tractor-Implement-Automation and its application to a tractor-loader wagon combination", 2ND INTERNATIONAL CONFERENCE ON MACHINE CONTROL & GUIDANCE PROCEEDINGS, 1 January 2010 (2010-01-01), pages 171 - 185, XP055491306

## Beschreibung

Die vorliegende Erfindung betrifft ein Verfahren zur Optimierung von Betriebsparametern eines einen Traktor und zumindest ein adaptiertes Anbaugerät umfassenden landwirtschaftlichen Gespanns, wobei zur Ansteuerung des Traktors eine Steuerungsvorrichtung des Traktors bidirektional Prozessdaten mittels eines traktorspezifischen Datenbussystems mit Arbeitsaggregaten des Traktors austauscht und zur Ansteuerung des zumindest einen Anbaugerätes eine Steuerungsvorrichtung des Anbaugerätes bidirektional Prozessdaten mittels eines ISOBUS-Systems mit Arbeitsaggregaten des Anbaugerätes austauscht. Weiterhin hat die vorliegende Erfindung ein landwirtschaftliches Gespann gemäß dem Oberbegriff des Anspruches 13 zum Gegenstand.

Anwendung findet das in Rede stehende Verfahren zur Optimierung von Betriebsparametern bei der Ansteuerung eines Traktors als Zugmaschine und zumindest eines Anbaugerätes, die ein landwirtschaftliches Gespann bilden. Das an den Traktor adaptierte Anbaugerät kann an diesen angekoppelt, aufgesattelt oder von diesem gezogen sein. Dabei kann ein und derselbe Traktor mit den unterschiedlichsten Anbaugeräten kombiniert werden. Bei solchen Anbaugeräten handelt es sich beispielsweise um Mähwerke, Ballenpressen, Schwader, Wender, Bodenbearbeitungsgeräte, Düngerstreuer, Spritzen oder dergleichen.

Ein Verfahren sowie ein landwirtschaftliches Gespann der eingangs genannten Art ist aus der EP 1 666 996 B1 bekannt. Darin ist ausgeführt, dass einem Trägerfahrzeug und einem Anbaugerät als Jobrechner ausgeführte Steuereinrichtungen zugeordnet sind, die jeweils über unterschiedliche Bussystem miteinander kommunizieren. Die Steuereinrichtung des Anbaugerätes nutzt ein ISOBUS-basiertes Bussystem, welches durch Schnittstellen mit dem Jobrechner des Trägerfahrzeugs gekoppelt wird, um mit diesem zwecks Datenaustausch zu kommunizieren. Dabei übernimmt der Jobrechner des Trägerfahrzeugs die übergeordnete Leitfunktion bei der Prozesssteuerung.

Maßgeblich für den Optimierungsvorgang des Gespanns sind dabei die empfangenen Signale des Anbaugerätes, welche von der Steuereinrichtung des Trägerfahrzeugs verwendet werden, um dieses anzusteuern. So kann beispielsweise ein als Ballenpresse ausgeführtes Anbaugerät an die Steuereinrichtung des Trägerfahrzeugs eine Information über den Auslastungsgrad senden. Signalisiert der Auslastungsgrad der Ballenpresse Kapazitätsreserven, so wird dem Trägerfahrzeug von dessen Jobrechner eine Geschwindigkeitserhöhung vorgeben, um die Ballenpresse in ihrem optimalen Betriebspunkt zu betreiben.

Weiterhin ist aus der EP 3 289 847 A1 ein Verfahren mit den oberbegrifflichen Merkmalen des unabhängigen Patentanspruchs 1 bekannt.

Ausgehend vom vorstehend genannten Technik liegt der Erfindung die Aufgabe zugrunde, ein Verfahren zur Optimierung von Betriebsparametern eines landwirtschaftlichen Gespanns weiterzubilden, welches eine das Gespann übergreifende Optimierung unter Berücksichtigung von bereitgestellten Prozessdaten des Traktors und des zumindest einen Anbaugerätes ermöglicht.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe durch die technischen Merkmale des nebengeordneten Anspruchs 13. Die hierauf folgenden abhängigen Ansprüche geben jeweils vorteilhafte Weiterbildungen der Erfindung wieder.

Gemäß dem Anspruch 1 wird ein Verfahren zur Optimierung von Betriebsparametern eines einen Traktor und zumindest ein adaptiertes Anbaugerät umfassenden landwirtschaftlichen Gespanns, wobei von einer Steuerungsvorrichtung des Traktors bidirektional Prozessdaten zur Ansteuerung von Arbeitsaggregaten des Traktors mit den Arbeitsaggregaten des Traktors ausgetauscht werden und zur Ansteuerung von Arbeitsaggregatendes zumindest einen Anbaugerätes eine Steuerungsvorrichtung des Anbaugerätes bidirektional Prozessdaten mittels eines ISOBUS-Systems mit den Arbeitsaggregaten des Anbaugerätes ausgetauscht werden. Erfindungsgemäß ist vorgesehen, dass durch eine eigenständige, dem Gespann zugeordnete Regeleinheit auf das ISOBUS-System des mindestens einen Anbaugerätes und das Datenbussystem des Traktors zugegriffen und das landwirtschaftliche Gespann unter Berücksichtigung der von dem ISOBUS-System des mindestens einen Anbaugerätes und von dem Datenbussystem des Traktors übertragenen Prozessdaten in einem durch die Regeleinheit ausgeführten Steuer- oder Regelungsprozess optimiert wird. Ein wesentlicher Vorteil der zentralen Regeleinheit besteht in einer prozessoptimieren Grundeinstellung von Traktor und Anbaugerät sowie einer individuellen Optimierung von Traktor- und Anbaugeräteeinstellungen während des laufenden Arbeitsprozesses. Hierzu werden Daten, die entweder durch das Datenbussystem des Traktors oder das ISOBUS-System des mindestens einen Anbaugerätes verfügbar sind, miteinander verknüpft bzw. in einen gemeinsamen Kontext gesetzt, um die Optimierung der Betriebsparameter von Traktor und Anbaugerät zu verbessern. Insbesondere soll die Optimierung aufeinander abgestimmt erfolgen.

Das ISOBUS-System kann CAN-Bus-basierend oder Ethernet-basierend ausgebildet sein.

Hierbei werden zur Optimierung der Betriebsparameter des Gespanns in einer Speichereinheit der Regeleinheit hinterlegte Regelwerke zur Verarbeitung der über das Datenbussystem und das ISOBUS-System empfangenen Prozessdaten von einer Recheneinheit der Regeleinheit ausgeführt werden. Der Begriff Prozessdaten umfasst dabei laufende Istwerte des Gespanns, Statusinformationen des Traktors und des zumindest einen Anbaugerätes sowie deren Konfigurationen.

Bevorzugt können von der Regeleinheit generierte Optimierungsvorschläge einer Bedienperson des Gespanns dialogbasiert vorgeschlagen oder automatisch eingestellt werden. Insbesondere ermöglicht es das Verfahren, individuellere Optimierungsvorschläge zu erstellen, ohne wiederholte Rückfragen an die Bedienperson hinsichtlich anbaugerätespezifischer Parameter durchführen zu müssen, die bereits auf dem ISOBUS-System verfügbar sind und somit auch der Regeleinheit zur Verfügung stehen. Die Bedienperson kann sich dabei auf dem Traktor des Gespanns befinden oder vom Gespann entfernt aufhalten, beispielsweise wenn das Gespann dazu eingerichtet ist, auf einem Feld autonom zu agieren.

Gemäß einer Weiterbildung können von dem an das ISOBUS-System angeschlossenen Anbaugerät und dem Traktor jeweils gerätespezifische Informationen an die Regeleinheit übertragen werden, welche einzubindende Signal- und Steuerkanäle einzelner Arbeitsaggregate des Anbaugerätes und des Traktors sowie Identifikatoren für das Anbaugerät und den Traktor beinhalten. Die Regeleinheit wird dadurch unter anderem in die Lage versetzt, die Zusammensetzung des Gespanns, d.h. den Typ des Traktors sowie die Art und den Typ des Anbaugerätes zu bestimmen. Darüber hinaus werden der Regeleinheit Informationen zur Verfügung gestellt, welche Prozessdaten und in welchem Umfang Prozessdaten von den jeweiligen Steuerungsvorrichtungen und/oder den einzelnen Arbeitsaggregaten der Regeleinheit zur Verfügung gestellt werden. Soweit die Regeleinheit die jeweiligen Daten zur Durchführung des Steuer- oder Regelungsprozess mit dem Ziel der Optimierung verwenden kann, dann werden die entsprechenden Optimierungsvorschläge der Bedienperson dialogbasiert vorgeschlagen oder automatisch eingestellt.

Vorteilhaft ist es, wenn die zu übertragenden gerätespezifischen Informationen als Beschreibungsdateien in der jeweiligen Steuerungsvorrichtung des Traktors und des Anbaugerätes abrufbar hinterlegt werden und nach einem Empfang durch die Regeleinheit in deren Speichereinheit gerätespezifisch abgespeichert werden. Hierdurch kann bei einem erneuten Einsatz des Traktors und/oder des Anbaugerätes eine erneute Übermittlung der Beschreibungsdateien vermieden werden, wenn diese individuell anhand der übermittelten Identifikatoren spezifiziert werden konnten.

Bevorzugt können die zu übertragenden gerätespezifischen Informationen in Abhängigkeit von spezifischen Parametern der Regeleinheit hinsichtlich Sprach- und Einheiteneinstellungen, insbesondere durch die jeweilige Steuerungsvorrichtung, angepasst werden. Dies dient der Vorbereitung der dialogbasierenden Kommunikation der Regeleinheit mit der Bedienperson. Hierzu kann die jeweilige Steuerungsvorrichtung des Gespanns jeweils ein Datentelegramm aussenden, welches eine entsprechende Anfrage hinsichtlich Sprach- und Einheiteneinstellungen an die Regeleinheit beinhaltet. Die Regeleinheit beantwortet diese Anfrage mit einem weiteren Datentelegramm, welches die angefragten Informationen beinhaltet. Die von der jeweiligen Steuerungsvorrichtung des Gespanns ausgesandten Datentelegramme können zudem auch eine Anfrage enthalten, ob eine spezifische Beschreibungsdatei bereits in der Regeleinheit hinterlegt ist.

Ein weiterer Aspekt kann der Austausch von Spezifikationen die Softwarestände der Steuerungsvorrichtungen betreffend sein. Die Software von Steuerungsvorrichtungen identischer Anbaugeräte eines Herstellers können unterschiedliche Versionsstände und/oder Konfigurationen aufweisen, was in der Regel mit einem unterschiedlichen Funktionsumfang einhergeht. Hierzu kann die Regeleinheit ein Datentelegramm an die jeweilige Steuerungsvorrichtung aussenden, mit welchem der Versionsstand und/oder die Konfiguration jeweils abgefragt wird. Die jeweilige Steuerungsvorrichtung kann mit einem korrespondierenden Datentelegramm antworten. Durch diesen Informationsaustausch kann die Regeleinheit bei der Durchführung des der Optimierung dienenden Steuer- oder Regelungsprozesses mögliche Restriktionen berücksichtigen, die sich aus einer Einschränkung des Funktionsumfanges gegenüber einem aktuelleren Versionsstand der Software der Steuerungsvorrichtung ergeben können. Dies kann auch das Bestimmen von Inkompatibilitäten umfassen.

Weiterhin können durch die Steuerungsvorrichtung des adaptierten Anbaugerätes zumindest einzelne der Signal- und Steuerkanäle zur Einbindung in den der Optimierung dienenden, von der Regeleinheit ausgeführten Steuer- oder Regelungsprozess freigegeben werden. Dies erlaubt es, eine insbesondere herstellerübergreifende Gespannoptimierung durchzuführen. Hierzu kann die Regeleinheit dazu eingerichtet sein, eine entsprechende Anfrage an die betreffende Steuerungsvorrichtung zu senden.

Bevorzugt kann die Ansteuerung der Steuerkanäle mittels ISOBUS-Datenkommunikation erfolgen. Dabei können für die Kommunikation ISOBUS-konforme Nachrichten, proprietär und/oder standardisiert, verwendet werden.

Gemäß einer Weiterbildung können sich der Traktor, das zumindest eine adaptierte Anbaugerät und die Regeleinheit gegenseitig mittels zyklisch versandter "Keep-alive"-Signale überwachen. Hierdurch kann eine Funktion zur Ausfallerkennung, eine sogenannte "Watchdog"-Überwachung, sichergestellt werden.

Insbesondere kann eine Trennung des adaptierten Anbaugerätes von dem ISOBUS-System und/oder ein Neuanschluss eines Anbaugerätes und/oder das Anschließen eines weiteren Anbaugerätes an das ISOBUS-System während des laufenden Betriebs vorgenommen werden. Das Trennen des adaptierten Anbaugerätes von dem ISOBUS-System wird durch das Ausbleiben des "Keep-alive"-Signals detektiert. Ein Neuanschluss eines Anbaugerätes kann durch das Aussenden eines Broadcast-Telegramms durch die Steuerungsvorrichtung des neu angeschlossenen Anbaugerätes bestimmt werden. Mittels des Broadcast-Telegramms wird zugleich eine Adresse des neu angeschlossenen Anbaugerätes übermittelt. Eine analoge Vorgehensweise gilt im Fall des Anschlusses eines weiteren Anbaugerätes während des laufenden Betriebes. Dabei ist unter dem Anschluss des weiteren Anbaugerätes im laufenden Betrieb zu verstehen, dass der laufende Arbeitsprozess für den Anschluss unterbrochen wird. Nachdem das weitere Anbaugerät adaptiert und sich am ISOBUS-System angemeldet hat, wird der Optimierungsprozess für das Gespann unter Berücksichtigung der über das ISOBUS-System übertragenen Daten des weiteren Anbaugerätes fortgesetzt.

Die Trennung des Anbaugerätes vom ISOBUS-System kann durch das Ausbleiben von "Keep-alive"-Signalen durch die Regeleinheit detektiert werden und das Anschließen eines Anbaugerätes kann durch das von der Steuerungsvorrichtung des angeschlossenen Anbaugerätes generierte Broadcast-Telegramms als Koppelsignal bestimmt werden.

Bevorzugt kann eine herstellerübergreifende Optimierung des landwirtschaftlichen Gespanns, welches aus einem Traktor eines Herstellers und dem zumindest einen Anbaugerät eines anderen Herstellers gebildet wird, durch eine zumindest teilweise Freischaltung der mittels des Datenbussystems und/oder des ISOBUS-Systems übertragenen Datenkommunikation zum Empfang und zur Auswertung durch die Regeleinheit bewirkt werden.

Gemäß einer Weiterbildung kann ein Optimierungsziel manuell oder automatisch ausgewählt werden, durch dessen Zielerreichung Art und Umfang der Kommunikation zwischen dem Traktor und dem zumindest einen Anbaugerät bestimmt wird, um die Optimierung von Betriebsparametern der Arbeitsaggregate des Gespanns durchzuführen. Hierzu können in der Speichereinheit bereits ein oder mehrere Optimierungsziele hinterlegt oder nach einer, insbesondere dialogbasierten, Erstellung durch die Bedienperson abgespeichert werden. So müssen einmalig der Regeleinheit zur Verfügung gestellte Informationen beispielsweise zur Arbeitsaufgabe, zum Anbaugerät, zur Arbeitszieldefinition von der Bedienperson nicht erneut zur Optimierung des Anbaugerätes eingegeben werden. Die Regeleinheit kann anhand der übermittelten Identifikatoren das Anbaugerät identifizieren und die diesbezüglich hinterlegten Informationen zur Arbeitsaufgabe, zum Anbaugerät, zur Arbeitszieldefinition oder dergleichen abrufen und der Bedienperson vorschlagen oder automatisch auswählen und umsetzen.

Das erfindungsgemäße Verfahren kann eine komfortable, dialoggeführte Optimierung des Arbeitsprozesses des Gespanns aus Traktor und adaptieren Anbaugerät für Funktionen ermöglichen, die noch nicht vollautomatisch ablaufen können. So bietet die dialogbasierende Kommunikation der Bedienperson mit der Regeleinheit eine schrittweise Teilautomatisierung von Funktionen der Arbeitsaggregate des Anbaugerätes. Weiterhin kann das Verfahren durch eine zentralisierte Dialogführung ermöglichen welche der Schritt zur Vollautomatisierung von Traktor und Anbaugerät sein kann, wenn die gleichen Optimierungsziele für Traktor- und Anbaugerät eingestellt sind.

Weiterhin wird die eingangs gestellte Aufgabe durch ein Landwirtschaftliches Gespann mit den Merkmalen des nebengeordneten Anspruches 13 gelöst.

Gemäß dem nebengeordneten Anspruch 13 wird ein landwirtschaftliches Gespann, umfassend einen Traktor und zumindest ein Anbaugerät, vorgeschlagen, wobei der Traktor eine Steuerungsvorrichtung zur Ansteuerung von Arbeitsaggregaten umfasst, die mittels eines traktorspezifischen Datenbussystems bidirektional Prozessdaten mit den Arbeitsaggregaten des Traktors austauscht, wobei das zumindest eine Anbaugerät eine Steuerungsvorrichtung zur Ansteuerung von Arbeitsaggregaten des Anbaugerätes umfasst, die mittels eines ISOBUS-Systems bidirektional Prozessdaten mit den Arbeitsaggregaten des Anbaugerätes austauscht, wobei dem Gespann eine eigenständige Regeleinheit zugeordnet ist, die dazu eingerichtet ist, auf das ISOBUS-System des mindestens einen Anbaugerätes und das Datenbussystem des Traktors zuzugreifen und Betriebsparameter des landwirtschaftlichen Gespanns unter Berücksichtigung der von dem ISOBUS-System des mindestens einen Anbaugerätes und dem Datenbussystem des Traktors übertragenen Prozessdaten zu optimieren.

Insbesondere kann die zur Durchführung des erfindungsgemäßen Verfahrens eingerichtete Regeleinheit des Gespanns in den Traktor oder in die am Traktor oder am Anbaugerät angeordnete Steuerungsvorrichtung, insbesondere eine an das ISOBUS-System angeschlossene ECU (electronic control unit), implementiert sein. Die Regeleinheit kann bevorzugt drahtgebunden oder drahtlos mit den Steuerungsvorrichtungen kommunizieren.

Bevorzugt kann die Regeleinheit dazu eingerichtet sein, aus einer Kombination aus mehreren zeitgleich an dem Traktor angeordneten unterschiedlichen Anbaugeräten eine optimale Regelgröße zu berechnen.

Auf die Vorteile des erfindungsgemäßen Verfahrens darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein vorschlagsgemäßes landwirtschaftliches Gespann;
- Fig. 2: schematisch eine dem Gespann zugeordnete Regeleinheit;
- Fig. 3: eine vereinfachte Darstellung eines Ablaufs einer gespannübergreifenden Kommunikation zwischen dem Gespann und der Regeleinheit.

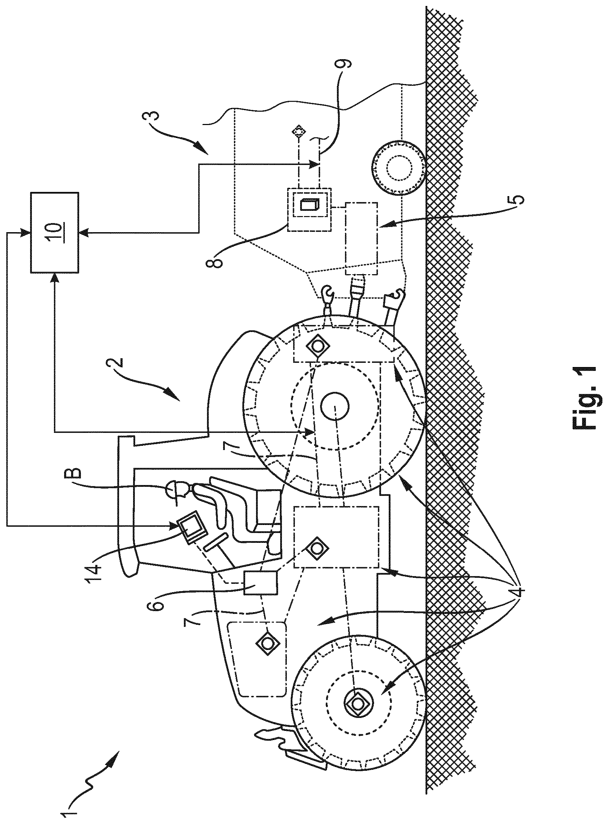

In Fig. 1 ist schematisch und exemplarisch ein vorschlagsgemäßes landwirtschaftliches Gespann 1 dargestellt. Das Gespann 1 weist eine als Traktor 2 ausgestaltete Zugmaschine und zumindest ein Anbaugerät 3 auf. Bei dem Anbaugerät 3 kann es sich um jedwedes Anbaugerät 3 handeln, welches an den Traktor 2 adaptierbar ist. Bei dem exemplarisch dargestellten Ausführungsbeispiel handelt es sich bei dem Anbaugerät 3 um eine Ballenpresse, mit der sich Heu, Stroh oder dergleichen zu Ballen pressen lässt. Die Ballenpresse steht stellvertretend für an den Traktor 2 adaptierbare Anbaugeräte 3. Der Begriff "adaptierbar" bezieht sich hierbei auf eine mechanische und/oder elektrische und/oder hydraulische Verbindung zwischen dem Traktor 2 und dem zumindest einen Anbaugerät 3. Von dem Begriff "adaptierbar" ist ebenfalls ein Datenaustausch zwischen dem Traktor 2 und dem zumindest einen Anbaugerät 3 umfasst, der drahtgebunden oder drahtlos erfolgen kann.

Der Traktor 2 weist mit Betriebsparametern einstellbare Arbeitsaggregate 4 auf. Arbeitsaggregate 4 des Traktors 2 sind beispielsweise ein Antriebsmotor, ein Getriebe, Zapfwellen, Hydraulikkomponenten wie eine Hydraulikpumpe oder Hydraulikzylinder, Front- und Heckkraftheber oder dergleichen. Das Anbaugerät 3 weist ebenfalls mit Betriebsparametern einstellbare Arbeitsaggregate 5 auf, welche sich in Abhängigkeit von der Art und dem Einsatzzweck des Anbaugerätes 3 sowohl von denen des Traktors 2 unterscheiden als auch untereinander unterscheiden können.

Der Traktor 2 umfasst eine Steuerungsvorrichtung 6 zur Ansteuerung der Arbeitsaggregate 4, die mittels eines traktorspezifischen Datenbussystems 7 bidirektional Daten mit den Arbeitsaggregaten 4 des Traktors 2 austauscht. Das zumindest eine Anbaugerät 3 umfasst ebenfalls eine Steuerungsvorrichtung 8 zur Ansteuerung der Arbeitsaggregate 5 des Anbaugerätes 3, die mittels eines ISOBUS-Systems 9 bidirektional Daten mit den Arbeitsaggregaten 5 des Anbaugerätes 3 austauscht.

Dem Gespann 1 ist eine eigenständige Regeleinheit 10 zugeordnet, die dazu eingerichtet ist, auf das ISOBUS-System 9 des mindestens einen Anbaugerätes 3 und das Datenbussystem 7 des Traktors 2 zuzugreifen. Die Regeleinheit 10 kann bevorzugt drahtgebunden oder drahtlos mit den Steuerungsvorrichtungen 6 und 8 des Traktors 2 sowie des Anbaugerätes 3 kommunizieren. Die Regeleinheit 10 kann in den Traktor 2 oder in die am Traktor 2 oder am Anbaugerät 3 angeordnete Steuerungsvorrichtung 6 bzw. 8, insbesondere eine an das ISOBUS-System angeschlossene ECU (electronic control unit), implementiert sein.

Durch die Regeleinheit 10 wird das landwirtschaftliche Gespann 1 unter Berücksichtigung der von dem ISOBUS-System 9 des mindestens einen Anbaugerätes 3 und von dem Datenbussystem 7 des Traktors 2 übertragenen Prozessdaten 25 in einem Steuer- oder Regelungsprozess optimiert.

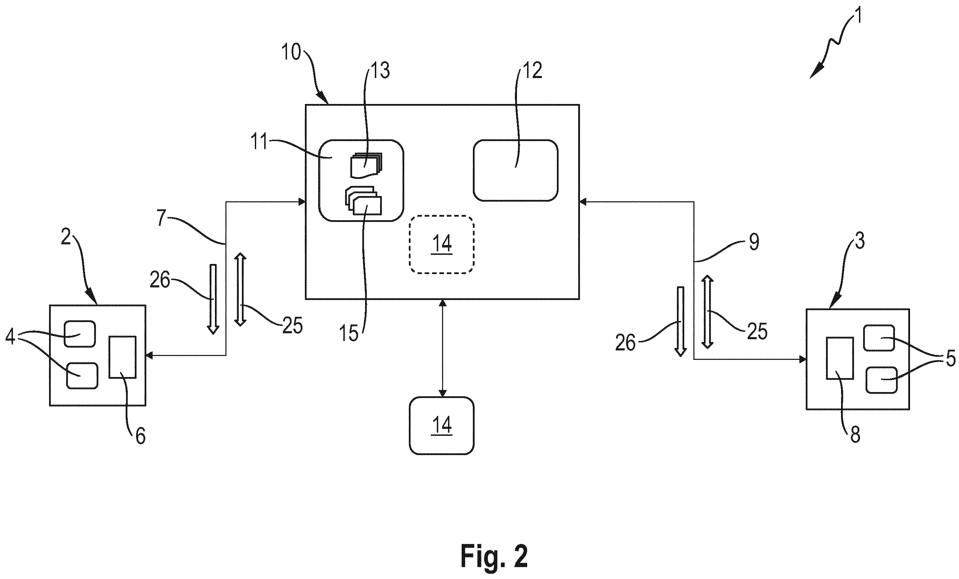

In Fig. 2 ist schematisch die dem Gespann 1 zugeordnete Regeleinheit 10 dargestellt. Die Regeleinheit 10 weist eine Speichereinheit 11 und eine Recheneinheit 12 auf. In der Speichereinheit 11 sind Regelwerke 13 hinterlegt. Zur Optimierung der Betriebsparameter des Gespanns 1 werden die in der Speichereinheit 11 hinterlegten Regelwerke 13 zur Verarbeitung der über das Datenbussystem 7 und das ISOBUS-System 9 empfangenen Daten des Gespanns 1 von der Recheneinheit 12 der Regeleinheit 10 ausgeführt. Die Regeleinheit 10 kann mit einer Eingabe-Ausgabeeinheit 14 des Traktors 2 verbunden sein oder eine eigene Eingabe-Ausgabeeinheit 14 umfassen.

Weiterhin können in der Speichereinheit 11 Beschreibungsdateien 15 von Anbaugeräten 3 hinterlegt sein, welche bereits einmal Teil des Gespanns 1 waren und somit der Regeleinheit 10 bekannt sind. Beschreibungsdateien 15 enthalten spezifische Daten des Anbaugerätes 3, wie Art und Typ, Hersteller sowie alle sonstigen für den Betrieb und das Ansteuern des Anbaugerätes 3 und dessen Arbeitsaggregate 5 erforderlichen Betriebsparameter.

Von der Regeleinheit 10 werden basierend auf den über das Datenbussystem 7 und das ISOBUS-System 9 empfangenen Prozessdaten 25 Optimierungsvorschläge bestimmt, welche einer Bedienperson B des Gespanns 1 dialogbasiert vorgeschlagen werden. Alternativ können die von der Regeleinheit 10 generierten Optimierungsvorschläge automatisch eingestellt werden. Die Optimierungsvorschläge enthalten Sollwertdaten und Steuerbefehle, mit denen die Betriebsparameter des Gespanns 1, d.h. der Arbeitsaggregate 4 und 5 von Traktor 2 und Anbaugerät 3, adaptiert werden, um eine aufeinander abgestimmte Optimierung des landwirtschaftlichen Gespanns 1 zu bewirken.

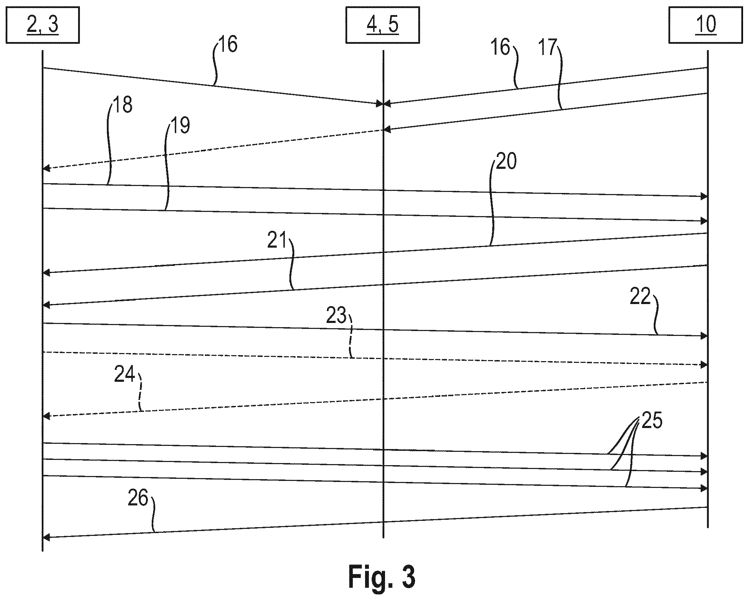

Fig. 3 zeigt eine vereinfachte Darstellung des Ablaufs einer gespannübergreifenden Kommunikation zwischen dem Gespann 1 und der Regeleinheit 10. Die in den Traktor 2 implementierte Regeleinheit 10 kann mit dem Datenbussystem 7 des Traktors 2 permanent in Verbindung stehen. Das Anbaugerät 3 muss an den Traktor 2 angeschlossen, angekoppelt, aufgesattelt oder in sonstiger Weise verbunden werden, wobei eine Verbindung zum ISOBUS-System 5 hergestellt wird. Damit die Regeleinheit 10 die von der jeweiligen Steuerungsvorrichtung 6, 8 und den Arbeitsaggregaten 4, 5 über das Datenbussystem 7 bzw. das ISOBUS-System 9 übertragenen Prozessdaten 25 empfangen und nach deren Auswertung und Verarbeitung Sollwertdaten und Steuerbefehle an die jeweilige Steuerungsvorrichtung 6, 8 übermitteln kann, bedarf es einer Initialisierung.

Der Vorgang der Initialisierung wird nachfolgend beispielhaft anhand der Adaption des Anbaugerätes 3 an den Traktor 2 beschrieben. Diese Vorgehensweise gilt im Wesentlichen auch entsprechend für den Traktor 2, wenn die Regeleinheit 10 nicht in diesen implementiert ist und mit dem Traktor 2 durch einen Verbindungsaufbau mit dem Datenbussystem 7 des Traktors 2 verbunden wird.

Das Anbaugerät 3, d.h. dessen Steuerungsvorrichtung 8, sendet über das ISOBUS-System 9 ein Broadcast-Telegramm 16 an alle Teilnehmer, die zum Datenempfang eingerichtet sind. Die Regeleinheit 10, welche mit dem ISOBUS-System 9 verbunden ist, sendet ihrerseits ebenfalls ein Broadcast-Telegramm 14. Das jeweilige Broadcast-Telegramm 16 enthält spezifische Adressdaten des Anbaugerätes 3 bzw. der Regeleinheit 10. Weiterhin sendet die Regeleinheit 10 zyklisch Status-Telegramme 17, mit welchen sich die Regeleinheit 10 gegenüber dem Anbaugerät 3 identifiziert. Empfängt das Anbaugerät 3 ein solches Status-Telegramm 17 reagiert dieses mit einem korrespondierenden Melde-Telegramm 18.

Im Anschluss sendet das Anbaugerät 3 ein Daten-Telegramm 19, mit welchem spezifische Betriebsparameter von der Regeleinheit 10 abgefragt werden, die für die weitere Kommunikation mit der Regeleinheit 10 erforderlich sind. Dazu zählen unter anderem Softwareversionsstand, Sprache, Einheiteneinstellung und/oder das Vorliegen einer bereits hinterlegten Beschreibungsdatei 15 für das Anbaugerät 2. Zu übertragende gerätespezifischen Informationen können in Abhängigkeit von spezifischen Parametern der Regeleinheit 10 hinsichtlich Sprach- und Einheiteneinstellungen, insbesondere durch die jeweilige Steuerungsvorrichtung 6, 8, angepasst werden.

Im Gegenzug sendet die Regeleinheit 10 im ersten Schritt ein Daten-Telegramm 20, welches die angeforderten Informationen umfasst, insbesondere ob eine dem Anbaugerät 3 zugeordnete Beschreibungsdatei 15 in der Speichereinheit 11 hinterlegt ist. Im zweiten Schritt sendet die Regeleinheit 10 ein weiteres Daten-Telegramm 21, mit welchem der Softwareversionsstand der Steuerungsvorrichtung 8 des Anbaugerätes 3 abgefragt wird. Dieses Daten-Telegramm 21 wird von der Steuerungsvorrichtung 8 des Anbaugerätes 3 mittels eines Daten-Telegramms 22 beantwortet. Optional erfolgt ein Übertragungsvorgang 23 der für das adaptierte Anbaugerät 3 spezifischen Beschreibungsdatei 15 an die Regeleinheit 10, welche daraufhin den Empfang und das Speichern der übertragenen Beschreibungsdatei 15 in der Speichereinheit 11 durch ein Empfangs-Telegramm 24 quittiert.

Damit ist der Prozess der Initialisierung abgeschlossen, so dass Prozessdaten 25 des Anbaugerätes 3 respektive der Arbeitsaggregate 5 und der Steuerungsvorrichtung 8 von der Regeleinheit 10 empfangen werden können, um diese zusammen mit den Prozessdaten 25 des Traktors 2, d.h. dessen Arbeitsaggregaten 4 und dessen Steuerungsvorrichtung 6, entsprechend der in der Speichereinheit 11 der Regeleinheit 10 hinterlegten Regelwerke 13 zu verarbeiten. Hierzu werden durch die Steuerungsvorrichtung 8 des adaptierten Anbaugerätes 3 Signal- und Steuerkanäle zur Einbindung in den der Optimierung dienenden, von der Regeleinheit 10 ausgeführten Steuer- oder Regelungsprozess freigegeben. Die Ansteuerung der Steuerkanäle erfolgt mittels ISOBUS-Datenkommunikation. Dabei werden für die Kommunikation ISOBUS-konforme DatenTelegramme 26, proprietär und/oder standardisiert, verwendet, mit welchen optimierte Sollwert-Daten für die Einstellung der Betriebsparameter der Arbeitsaggregate 4, 5 übermittelt werden.

Weiterhin ist vorgesehen, dass sich der Traktor 2, das zumindest eine adaptierte Anbaugerät 3 und die Regeleinheit 19 gegenseitig mittels zyklisch versandter "Keep-alive"-Signale überwachen. Dies dient dazu, etwaige Änderungen im Gespann 1, insbesondere durch einen Austausch oder eine Hinzunahme eines Anbaugerätes 3 zu detektieren. In beiden Fällen ist eine erneute Initialisierung erforderlich. Das Verfahren ermöglicht es, eine Trennung des adaptierten Anbaugerätes 3 von dem ISOBUS-System 9 und/oder einen Neuanschluss eines Anbaugerätes 3 und/oder das Anschließen eines weiteren Anbaugerätes 3 an das ISOBUS-System 9 während des laufenden Betriebs vorzunehmen.

Darüber hinaus kann eine herstellerübergreifende Optimierung des landwirtschaftlichen Gespanns 1, welches aus einem Traktor 2 eines Herstellers und dem zumindest einen Anbaugerät 3 eines anderen Herstellers gebildet wird, durch eine zumindest teilweise Freischaltung der mittels des Datenbussystems 7 und/oder des ISOBUS-Systems 9 übertragenen Prozessdaten 25 durch die Steuerungsvorrichtung 6 und/oder die Steuerungsvorrichtung 8 zum Empfang und zur Auswertung durch die Regeleinheit 10 bewirkt werden.

Ein Optimierungsziel des Gespanns 1 kann von der Bedienperson B manuell ausgewählt werden, durch dessen Zielerreichung Art und Umfang der Kommunikation zwischen dem Traktor 2 und dem zumindest einen Anbaugerät 3 bestimmt wird, um die Optimierung von Betriebsparametern der Arbeitsaggregate 4, 5 des Gespanns 1 durchzuführen. Ein Optimierungsziel des Gespanns 1 kann auch automatisch durch die Regeleinheit 10 ausgewählt werden. Hierzu können in der Speichereinheit 11 bereits ein oder mehrere Optimierungsziele hinterlegt oder nach einer, insbesondere dialogbasierten, Erstellung durch die Bedienperson B abgespeichert werden. So müssen einmalig der Regeleinheit 10 zur Verfügung gestellte Informationen, beispielsweise zur Arbeitsaufgabe, zum Anbaugerät 3, zur Arbeitszieldefinition, von der Bedienperson B nicht erneut zur Optimierung des spezifischen Anbaugerätes 3 eingegeben werden, wenn eine dem Anbaugerät 3 zugeordnete Beschreibungsdatei 15 der Regeleinheit 10 bereits zu einem früheren Zeitpunkt übertragen wurde. Die Regeleinheit 10 kann anhand der übermittelten Identifikatoren das Anbaugerät 3 identifizieren und die diesbezüglich hinterlegten Informationen zur Arbeitsaufgabe, zum Anbaugerät, zur Arbeitszieldefinition oder dergleichen abrufen und der Bedienperson B vorschlagen oder automatisch auswählen und umsetzen.

### Bezugszeichenliste

- 1: Landwirtschaftliches Gespann
- 2: Traktor
- 3: Anbaugerät
- 4: Arbeitsaggregat
- 5: Arbeitsaggregat
- 6: Steuerungsvorrichtung
- 7: Datenbussystem
- 8: Steuerungsvorrichtung
- 9: ISOBUS-System
- 10: Regeleinheit
- 11: Speichereinheit
- 12: Recheneinheit
- 13: Regelwerk
- 14: Eingabe-Ausgabeeinheit
- 15: Beschreibungsdatei
- 16: Broadcast-Telegramm
- 17: Status-Telegramm
- 18: Melde-Telegramm
- 19: Daten-Telegramm
- 20: Daten-Telegramm
- 21: Daten-Telegramm
- 22: Daten-Telegramm
- 23: Übertragungsvorgang
- 24: Empfangs-Telegramm
- 25: Prozessdaten
- 26: Daten-Telegramm
- B: Bedienperson

## Patentansprüche

1. Verfahren zur Optimierung von Betriebsparametern eines einen Traktor (2) und zumindest ein adaptiertes Anbaugerät (3) umfassenden landwirtschaftlichen Gespanns (1), wobei von einer Steuerungsvorrichtung (6) des Traktors (2) bidirektional Prozessdaten (25) zur Ansteuerung von Arbeitsaggregaten (4) des Traktors (2) mit den Arbeitsaggregaten (4) des Traktors (2) ausgetauscht werden, und zur Ansteuerung des zumindest einen Anbaugerätes (3) eine Steuerungsvorrichtung (8) des Anbaugerätes (3) Prozessdaten (25) bidirektional mittels eines ISOBUS-Systems (9) mit Arbeitsaggregaten (5) des Anbaugerätes (3) ausgetauscht werden, **dadurch gekennzeichnet, dass** durch eine dem Gespann (1) zugeordnete eigenständige Regeleinheit (10) auf das ISOBUS-System (9) des mindestens einen Anbaugerätes (3) und das Datenbussystem (7) des Traktors (2) zugegriffen und das landwirtschaftliche Gespann (1) unter Berücksichtigung der von dem ISOBUS-System (9) des mindestens einen Anbaugerätes (3) und von dem Datenbussystem (8) des Traktors (2) übertragenen Prozessdaten (25) in einem durch die Regeleinheit (10) ausgeführten Steuer- oder Regelungsprozess optimiert wird, wobei zur Optimierung der Betriebsparameter des Gespanns (1) in einer Speichereinheit (11) der Regeleinheit (10) hinterlegte Regelwerke (13) zur Verarbeitung der über das Datenbussystem (7) und das ISOBUS-System (9) empfangenen Prozessdaten (25) von einer Recheneinheit (12) der Regeleinheit (10) ausgeführt werden.

2. Verfahren nach Anspruch 1, **dadurch gekennzeichnet, dass** von der Regeleinheit (10) generierte Optimierungsvorschläge einer Bedienperson (B) des Gespanns (1) dialogbasiert vorgeschlagen oder automatisch eingestellt werden.

3. Verfahren nach einem der vorangehenden Ansprüche, **dadurch gekennzeichnet, dass** von dem an das ISOBUS-System (9) angeschlossenen Anbaugerät (3) und dem Traktor (2) jeweils gerätespezifische Informationen an die Regeleinheit (10) übertragen werden, welche einzubindende Signal- und Steuerkanäle einzelner Arbeitsaggregate (4, 5) des Anbaugerätes (3) und des Traktors (2) sowie Identifikatoren für das Anbaugerät (3) und den Traktor (2) beinhalten.

4. Verfahren nach Anspruch 3, **dadurch gekennzeichnet, dass** die zu übertragenden gerätespezifischen Informationen als Beschreibungsdateien (15) in der jeweiligen Steuerungsvorrichtung (6, 8) des Traktors (2) und des Anbaugerätes (3) abrufbar hinterlegt werden und nach einem Empfang durch die Regeleinheit (10) in der Speichereinheit (10) gerätespezifisch abgespeichert werden.

5. Verfahren nach Anspruch 3 oder 4, **dadurch gekennzeichnet, dass** die zu übertragenden gerätespezifischen Informationen in Abhängigkeit von spezifischen Parametern der Regeleinheit (10) hinsichtlich Sprach- und Einheiteneinstellungen, insbesondere durch die jeweilige Steuerungsvorrichtung (6, 8), angepasst werden.

6. Verfahren nach einem der Ansprüche 3 bis 5, **dadurch gekennzeichnet, dass** durch die Steuerungsvorrichtung (8) des adaptierten Anbaugerätes (3) die Signal- und Steuerkanäle zur Einbindung in den der Optimierung dienenden, von der Regeleinheit (10) ausgeführten Steuer- oder Regelungsprozess freigegeben werden.

7. Verfahren nach einem der Ansprüche 3 bis 6, **dadurch gekennzeichnet, dass** die Ansteuerung der Steuerkanäle mittels ISOBUS- Datenkommunikation erfolgt.

8. Verfahren nach einem der vorangehenden Ansprüche, **dadurch gekennzeichnet, dass** sich der Traktor (2), das zumindest eine adaptierte Anbaugerät (3) und die Regeleinheit (10) gegenseitig mittels zyklisch versandter "Keep-alive"-Signale überwachen.

9. Verfahren nach einem der vorangehenden Ansprüche, **dadurch gekennzeichnet, dass** eine Trennung des adaptierten Anbaugerätes (3) von dem ISOBUS-System (9) und/oder ein Neuanschluss eines Anbaugerätes (3) und/oder das Anschließen eines weiteren Anbaugerätes (3) an das ISOBUS-System (9) während des laufenden Betriebs vorgenommen wird.

10. Verfahren nach Anspruch 9, **dadurch gekennzeichnet, dass** die Trennung des Anbaugerätes (3) vom ISOBUS-System (9) durch das Ausbleiben von "Keep-alive"-Signalen durch die Regeleinheit (10) detektiert wird und das Anschließen eines Anbaugerätes (3) durch ein von der Steuerungsvorrichtung (8) des Anbaugerätes (3) generiertes Broadcast-Telegramm (16).

11. Verfahren nach einem der vorangehenden Ansprüche, **dadurch gekennzeichnet, dass** eine herstellerübergreifende Optimierung des landwirtschaftlichen Gespanns (1), welches aus einem Traktor (2) eines Herstellers und dem zumindest einen Anbaugerät (3) eines anderen Herstellers gebildet wird, durch eine zumindest teilweise Freischaltung der mittels des Datenbussystems (7) und/oder des ISOBUS-Systems (9) übertragenen Datenkommunikation (25) zum Empfang und zur Auswertung durch die Regeleinheit (10) bewirkt werden.

12. Verfahren nach einem der vorangehenden Ansprüche, **dadurch gekennzeichnet, dass** ein Optimierungsziel manuell oder automatisch ausgewählt wird, durch dessen Zielerreichung Art und Umfang der Kommunikation zwischen dem Traktor (2) und dem zumindest einen Anbaugerät (3) bestimmt wird, um die Optimierung von Betriebsparametern der Arbeitsaggregate (4, 5) des Gespanns (1) durchzuführen.

13. Landwirtschaftliches Gespann (1), umfassend einen Traktor (2) und zumindest ein Anbaugerät (3), wobei der Traktor (2) eine Steuerungsvorrichtung (6) zur Ansteuerung von Arbeitsaggregaten (4) des Traktors (2) umfasst, die mittels eines traktorspezifischen Datenbussystems (7) bidirektional Prozessdaten (25) mit den Arbeitsaggregaten (4) des Traktors (2) austauscht, wobei das zumindest eine Anbaugerät (3) eine Steuerungsvorrichtung (8) zur Ansteuerung von Arbeitsaggregaten (5) des Anbaugerätes (3) umfasst, die mittels eines ISOBUS-Systems (9) bidirektional Prozessdaten (25) mit den Arbeitsaggregaten (5) des Anbaugerätes (3) austauscht, **dadurch gekennzeichnet, dass** dem Gespann (1) eine eigenständige Regeleinheit (10) zugeordnet ist, die dazu eingerichtet ist, auf das ISOBUS-System (9) des mindestens einen Anbaugerätes (3) und das Datenbussystem (7) des Traktors (2) zuzugreifen und Betriebsparameter des landwirtschaftlichen Gespanns (1) unter Berücksichtigung der von dem ISOBUS-System (9) des mindestens einen Anbaugerätes (3) und dem Datenbussystem (7) des Traktors (2) übertragenen Prozessdaten (25) in einem durch die Regeleinheit (10) ausgeführten Steuer- oder Regelungsprozess zu optimieren, wobei eine Recheneinheit (12) der Regeleinheit (10) dazu eingerichtet ist, zur Optimierung der Betriebsparameter des Gespanns (1) in einer Speichereinheit (11) der Regeleinheit (10) hinterlegte Regelwerke (13) zur Verarbeitung der über das Datenbussystem (7) und das ISOBUS-System (9) empfangenen Prozessdaten (25) auszuführen.

14. Landwirtschaftliches Gespann nach Anspruch 13, **dadurch gekennzeichnet, dass** die zur Durchführung des Verfahrens 1 bis 12 eingerichtete Regeleinheit (10) in den Traktor (2) oder in die am Traktor (2) oder am Anbaugerät (3) angeordnete Steuerungsvorrichtung (6, 8) implementiert ist.

## Claims

1. Method for optimizing operating parameters of an agricultural vehicle combination (1) comprising a tractor (2) and at least one adapted attachment (3), wherein, in order to control working units (4) of the tractor (2), process data (25) are bidirectionally exchanged with the working units (4) of the tractor (2) by a control device (6) of the tractor (2), and, in order to control the at least one attachment (3), process data (25) are bidirectionally exchanged with working units (5) of the attachment (3) a control device (8) of the attachment (3) by means of an ISOBUS system (9), **characterized in that** the ISOBUS system (9) of the at least one attachment (3) and the databus system (7) of the tractor (2) are accessed by an independent control unit (10) assigned to the vehicle combination (1), and the agricultural vehicle combination (1) is optimized in an open-loop or closed-loop control process executed by the control unit (10) taking into account the process data (25) transmitted by the ISOBUS system (9) of the at least one attachment (3) and by the databus system (8) of the tractor (2), wherein control rules (13), stored in a memory unit (11) of the control unit (10), for processing the process data (25) received via the databus system (7) and the ISOBUS system (9) are executed by a computing unit (12) of the control unit (10) in order to optimize the operating parameters of the vehicle combination (1).

2. Method according to Claim 1, **characterized in that** optimization proposals generated by the control unit (10) are proposed to an operator (B) of the vehicle combination (1) in a dialogue-based manner or are set automatically.

3. Method according to either of the preceding claims, **characterized in that** device-specific information is transmitted to the control unit (10) in each case from the attachment (3) connected to the ISOBUS system (9) and from the tractor (2), which information contains signal and control channels to be incorporated of individual working units (4, 5) of the attachment (3) and of the tractor (2), and identifiers for the attachment (3) and the tractor (2).

4. Method according to Claim 3, **characterized in that** the device-specific information to be transmitted is stored as description files (15) in the respective control device (6, 8) of the tractor (2) and of the attachment (3) in a retrievable manner and, after being received by the control unit (10), is stored in the memory unit (10) in a device-specific manner.

5. Method according to Claim 3 or 4, **characterized in that** the device-specific information to be transmitted is adapted depending on specific parameters of the control unit (10) with regard to language and unit settings, in particular by the respective control device (6, 8).

6. Method according to one of Claims 3 to 5, **characterized in that** the signal and control channels to be incorporated into the open-loop or closed-loop control process executed by the control unit (10), said process being used for the optimization, are enabled by the control device (8) of the adapted attachment (3).

7. Method according to one of Claims 3 to 6, **characterized in that** the control channels are controlled by means of ISOBUS data communication.

8. Method according to one of the preceding claims, **characterized in that** the tractor (2), the at least one adapted attachment (3) and the control unit (10) monitor one another by means of cyclically sent "keep-alive" signals.

9. Method according to one of the preceding claims, **characterized in that** the adapted attachment (3) is disconnected from the ISOBUS system (9) and/or an attachment (3) is newly connected and/or a further attachment (3) is connected to the ISOBUS system (9) during ongoing operation.

10. Method according to Claim 9, **characterized in that** the disconnection of the attachment (3) from the ISOBUS system (9) is detected by the control unit (10) as a result of the absence of "keep-alive" signals, and the connection of an attachment (3) is detected by a broadcast telegram (16) generated by the control device (8) of the attachment (3).

11. Method according to one of the preceding claims, **characterized in that** inter-manufacturer optimization of the agricultural vehicle combination (1) formed from a tractor (2) of one manufacturer and the at least one attachment (3) of another manufacturer is brought about by at least partially enabling the data communication (25) transmitted by means of the databus system (7) and/or the ISOBUS system (9) for reception and for evaluation by the control unit (10).

12. Method according to one of the preceding claims, **characterized in that** an optimization target is selected manually or automatically, the achievement of which target determines the type and extent of the communication between the tractor (2) and the at least one attachment (3), in order to carry out the optimization of operating parameters of the working units (4, 5) of the vehicle combination (1).

13. Agricultural vehicle combination (1), comprising a tractor (2) and at least one attachment (3), wherein the tractor (2) comprises a control device (6) for controlling working units (4) of the tractor (2), which control device bidirectionally exchanges process data (25) with the working units (4) of the tractor (2) by means of a tractor-specific databus system (7), wherein the at least one attachment (3) comprises a control device (8) for controlling working units (5) of the attachment (3), which control device bidirectionally exchanges process data (25) with the working units (5) of the attachment (3) by means of an ISOBUS system (9), **characterized in that** an independent control unit (10) is assigned to the vehicle combination (1), which control unit is configured to access the ISOBUS system (9) of the at least one attachment (3) and the databus system (7) of the tractor (2) and to optimize operating parameters of the agricultural vehicle combination (1) in an open-loop or closed-loop control process executed by the control unit (10) taking into account the process data (25) transmitted by the ISOBUS system (9) of the at least one attachment (3) and by the databus system (7) of the tractor (2), wherein a computing unit (12) of the control unit (10) is configured to execute control rules (13), stored in a memory unit (11) of the control unit (10), for processing the process data (25) received via the databus system (7) and the ISOBUS system (9), in order to optimize the operating parameters of the vehicle combination (1).

14. Agricultural vehicle combination according to Claim 13, **characterized in that** the control unit (10) configured to carry out the method 1 to 12 is implemented in the tractor (2) or in the control device (6, 8) arranged on the tractor (2) or on the attachment (3).

## Revendications

1. Procédé d'optimisation de paramètres de fonctionnement d'un attelage agricole (1) comprenant un tracteur (2) et au moins un outil adapté (3), dans lequel des données de processus (25) pour la commande d'unités de travail (4) du tracteur (2) sont échangées de manière bidirectionnelle par un dispositif de commande (6) du tracteur (2) avec lesdites unités de travail (4) du tracteur (2), et pour la commande de l'au moins un outil (3), des données de processus (25) sont échangées de manière bidirectionnelle un dispositif de commande (8) de l'outil (3) au moyen d'un système ISOBUS (9) avec des unités de travail (5) de l'outil (3), **caractérisé en ce qu'**un accès est effectué par une unité de régulation indépendante (10) associée à l'attelage (1), au système ISOBUS (9) de l'au moins un outil (3) et au système de bus de données (7) du tracteur (2), et l'attelage agricole (1) est optimisé dans un processus de commande ou de régulation exécuté par l'unité de régulation (10) en tenant compte des données de processus (25) transmises par le système ISOBUS (9) de l'au moins un outil (3) et par le système de bus de données (8) du tracteur (2), dans lequel, pour l'optimisation des paramètres de fonctionnement de l'attelage (1), des règles de régulation (13) mémorisées dans une unité de mémoire (11) de l'unité de régulation (10) sont exécutées par une unité de calcul (12) de l'unité de régulation (10) pour le traitement des données de processus (25) reçues par le biais du système de bus de données (7) et du système ISOBUS (9).

2. Procédé selon la revendication 1, **caractérisé en ce que** des propositions d'optimisation générées par l'unité de régulation (10) sont proposées à un opérateur (B) de l'attelage (1) sur la base d'un dialogue ou sont réglées automatiquement.

3. Procédé selon l'une des revendications précédentes, **caractérisé en ce que** des informations spécifiques à l'appareil sont respectivement transmises par l'outil (3) relié au système ISOBUS (9) et par le tracteur (2) à l'unité de régulation (10), lesquelles informations contiennent des canaux de signal et de commande à intégrer d'unités de travail (4, 5) individuelles de l'outil (3) et du tracteur (2), ainsi que des identifiants pour l'outil (3) et le tracteur (2).

4. Procédé selon la revendication 3, **caractérisé en ce que** les informations spécifiques à l'appareil à transmettre sont mémorisées de manière à pouvoir être consultées sous forme de fichiers de description (15) dans le dispositif de commande respectif (6, 8) du tracteur (2) et de l'outil (3) et, après une réception par l'unité de régulation (10), sont mémorisées de manière spécifique à l'appareil dans l'unité de mémoire (10).

5. Procédé selon la revendication 3 ou 4, **caractérisé en ce que** les informations spécifiques à l'appareil à transmettre sont ajustées en fonction de paramètres spécifiques de l'unité de régulation (10) en ce qui concerne les réglages de langue et d'unité, en particulier par l'appareil de commande respectif (6, 8).

6. Procédé selon l'une des revendications 3 à 5, **caractérisé en ce qu'**au moyen du dispositif de commande (8) de l'outil adapté (3), les canaux de signal et de commande sont libérés en vue de l'intégration dans le processus de commande ou de régulation exécuté par l'unité de régulation (10) et servant à l'optimisation.

7. Procédé selon l'une des revendications 3 à 6, **caractérisé en ce que** la commande des canaux de commande est effectuée au moyen d'une communication de données ISOBUS.

8. Procédé selon l'une des revendications précédentes, **caractérisé en ce que** le tracteur (2), l'au moins un outil adapté (3) et l'unité de régulation (10) se surveillent mutuellement au moyen de signaux "Keep-alive" transmis cycliquement.

9. Procédé selon l'une des revendications précédentes, **caractérisé en ce qu'**une déconnexion de l'outil adapté (3) du système ISOBUS (9) et/ou une nouvelle connexion d'un outil (3) et/ou la connexion d'un autre outil (3) au système ISOBUS (9) est/sont effectuée(s) pendant le fonctionnement en cours.

10. Procédé selon la revendication 9, **caractérisé en ce que** la déconnexion de l'outil (3) d'avec le système ISOBUS (9) est détectée par l'unité de régulation (10) par l'absence de signaux "Keep-alive" et **en ce que** la connexion d'un outil (16) est détectée par un télégramme de diffusion (3) généré par le dispositif de commande (8) de l'outil (3).

11. Procédé selon l'une des revendications précédentes, **caractérisé en ce qu'**une optimisation inter-constructeur de l'attelage agricole (1), lequel est composé d'un tracteur (2) d'un constructeur et de l'au moins un outil (3) d'un autre constructeur, est obtenue par une libération au moins partielle de la communication de données (25) transmise au moyen du système de bus de données (7) et/ou du système ISOBUS (9) en vue de la réception et de l'évaluation par l'unité de régulation (10).

12. Procédé selon l'une des revendications précédentes, **caractérisé en ce qu'**un objectif d'optimisation est sélectionné manuellement ou automatiquement, dont la réalisation détermine le type et l'étendue de la communication entre le tracteur (2) et l'au moins un outil (3) afin d'effectuer l'optimisation de paramètres de fonctionnement des unités de travail (4, 5) de l'attelage (1).

13. Attelage agricole (1) comprenant un tracteur (2) et au moins un outil (3), le tracteur (2) comprenant un dispositif de commande (6) pour commander des unités de travail (4) du tracteur (2), lequel dispositif échange de manière bidirectionnelle des données de processus (25) avec les unités de travail (4) du tracteur (2) au moyen d'un système de bus de données (7) spécifique au tracteur, l'au moins un outil (3) comprenant un dispositif de commande (8) pour commander des unités de travail (5) de l'outil (3), lequel dispositif échange de manière bidirectionnelle des données de processus (25) avec les unités de travail (5) de l'outil (3) au moyen d'un système ISOBUS (9), **caractérisé en ce qu'**une unité de régulation indépendante (10) est associée à l'attelage (1), laquelle unité est conçue pour accéder au système ISOBUS (9) de l'au moins un outil (3) et au système de bus de données (7) du tracteur (2) et pour optimiser des paramètres de fonctionnement de l'attelage agricole (1) dans un processus de commande ou de régulation exécuté par l'unité de régulation (10) en tenant compte des données de processus (25) transmises par le système ISOBUS (9) de l'au moins un outil (3) et par le système de bus de données (7) du tracteur (2), une unité de calcul (12) de l'unité de régulation (10) étant conçue, afin d'optimiser les paramètres de fonctionnement de l'attelage (1), pour exécuter des règles de régulation (13) mémorisées dans une unité de mémoire (11) de l'unité de régulation (10) pour traiter les données de processus (25) reçues par le biais du système de bus de données (7) et du système ISOBUS (9).

14. Attelage agricole selon la revendication 13, **caractérisé en ce que** l'unité de régulation (10) conçue pour la réalisation du procédé 1 à 12 est mise en œuvre dans le tracteur (2) ou dans le dispositif de commande (6, 8) disposé sur le tracteur (2) ou sur l'outil (3).
